# EUROPÄISCHE PATENTSCHRIFT

(11) **EP 3 254 876 B1**
(45) Veröffentlichungstag und Bekanntmachung des Hinweises auf die Patenterteilung: **15.07.2020**
(21) Anmeldenummer: 17167297.5
(22) Anmeldetag: 20.04.2017
(51) Int. Cl.: B60J 5/06, F16D 1/10, B60J 7/08

(54) **ZUSAMMENFASSUNG EINER AUFWICKELWELLE FÜR EINEN LKW-AUFBAU MIT EINEM ADAPTERTEIL SOWIE ADAPTERTEIL FÜR EINE VERBINDUNG ZWISCHEN EINER AUFWICKELWELLE UND EINER ANTRIEBSWELLE**
COMPOSITION OF A WINDING SHAFT FOR A TRUCK BODY WITH AN ADAPTER PART AND ADAPTER PART FOR A CONNECTION BETWEEN A WINDING SHAFT AND A DRIVE SHAFT
COMPOSITION D'UN ARBRE ENROULEUR POUR UN CHÂSSIS DE CAMION COMPRENANT UNE PARTIE ADAPTATRICE ET PARTIE ADAPTATRICE POUR UNE LIAISON ENTRE UN ARBRE ENROULEUR ET UN ARBRE D'ENTRAÎNEMENT

(30) Priorität: 18.05.2016 DE 102016109154; 31.05.2016 DE 102016110036
(43) Veröffentlichungstag der Anmeldung: 13.12.2017
(73) Patentinhaber: PWP SA, CH-1530 Payerne (CH)
(72) Erfinder: Gijsbers, Erik, 3232 Ins (CH); Suer, Arne, 42859 Remscheid (DE)
(74) Vertreter: Müller, Enno

(56) Entgegenhaltungen:
- EP-A1- 0 018 073
- EP-A1- 1 378 385
- WO-A1-03/104668
- CA-A1- 2 279 560
- GB-A- 547 988
- GB-A- 2 143 893

## Beschreibung

### Gebiet der Technik

Die Erfindung betrifft zunächst eine Zusammenfassung einer Aufwickelwelle für einen LKW-Aufbau mit einem Adapterteil, um über eine Antriebswelle auf die Aufwickelwelle einwirken zu können, wobei die im Querschnitt im Wesentlichen eine Kreisform aufweisende Aufwickelwelle in eine angepasste, sich in Achsrichtung der Aufwickelwelle erstreckende und einen Boden aufweisende Öffnung des Adapterteils eingeführt ist, wobei die Aufwickelwelle eine sich in Längsrichtung der Aufwickelwelle und von der Außenfläche nach innen erstreckende Nut aufweist, in welche ein Mitnahmevorsprung des Adapterteils, der ausgebildet ist von einer die Öffnung bildenden Wandung, eingreift.

Auch betrifft die Erfindung ein Adapterteil für eine Verbindung zwischen einer Aufwickelwelle für einen LKW-Aufbau und einer Antriebswelle, wobei das Adapterteil eine in Achsrichtung sich erstreckende und einen Boden aufweisende Öffnung aufweist und einen im Querschnitt nach innen gerichteten Mitnahmevorsprung, der ausgebildet ist von einer die Öffnung bildenden Wandung.

### Stand der Technik

Insbesondere im Bereich von LKW-Aufbauten sind solche Zusammenfassungen bzw. derartige Adapterteile bekannt. Über eine Aufwickelwelle kann bspw. eine LKW-Plane auf- und abgewickelt werden. Die Aufwickelwelle ist zumindest über ein endseitig drehfest mit der Aufwickelwelle verbundenes Adapterteil mit einer Antriebswelle verbunden. Letztere wirkt über das Adapterteil drehantreibend auf die Aufwickelwelle. Es wird zum Stand der Technik beispielhaft auf die EP 1 378 385 B2 verwiesen.

Insbesondere zur um die Längsachse der Aufwickelwelle betrachteten drehfesten Verbindung von Adapterteil und Aufwickelwelle ist die Aufwickelwelle mit einer in Längsrichtung der Aufwickelwelle verlaufenden Nut versehen, in welche ein Mitnahmevorsprung des Adapterteils eingreift.

Die Aufwickelwelle und das Adapterteil werden bei bekannten Lösungen bspw. unter Nutzung einer hydraulischen Presseinrichtung ineinandergesteckt. Es kann hiernach zusätzlich noch eine Formschlussverbindung zufolge Verformung hergestellt werden, um auch in Achsrichtung das Adapterteil an der Aufwickelwelle zu sichern. So sind Lösungen bekannt, bei welchen ein von außen auf die Wandung des Adapterteils einwirkender Dorn eine solche Formschlussverbindung zufolge entsprechender Wandungsverformung von Aufwickelwelle und Adapterteil herbeiführt.

Darüber hinaus ist in üblicher Weise eine solche Aufwickelwelle als Aluminiumprofil ausgebildet. Das Adapterteil ist materialmäßig gegenüber der Aufwickelwelle härter eingestellt, bspw. kann es sich hierbei um ein Stahlgussteil handeln.

Aus der US 5,527,227 A ist die Verbindung einer Riemenscheibe mit einer Welle bekannt, wobei ein scheibenförmiges Nabenteil, an welchem radial außen die Riemenlauffläche ausgebildet ist, eine zentrale Nabe aufweist, mit welcher die Welle drehfest verbunden ist. Hierzu ist die Welle durch eine Durchgangsöffnung der Nabe hindurchgesteckt und daran schraubgesichert. Zudem ist die Nabe mit einer radial nach innen, in eine Nut der Welle eingreifende Formschlussausbiegung versehen. Aus der GB 574988 A ist die Verbindung einer an einem Einsteckende mit über den Umfang einer Vielzahl von Nuten versehenen Welle mit einer Nabe bekannt, die durch Ausbrechungen an ihrer Umfangswand frei in das Innere der Nabe vorstehende Zähne bildet, die in die Nuten eingreifen.

### Zusammenfassung der Erfindung

Im Hinblick auf den bekannten Stand der Technik beschäftigt sich die Erfindung mit der Problematik, die Formschlussverbindung zwischen Aufwickelwelle und Adapterteil weiter zu verbessern.

Bezüglich des Adapterteils beschäftigt sich die Erfindung mit der Aufgabe, ein solches Adapterteil in gebrauchsvorteilhafter Weise weiter zu verbessern.

Diese Aufgabe ist bezüglich der Zusammenfassung durch den Gegenstand des Anspruches 1 gelöst und bezüglich des Adapterteils durch den Gegenstand des Anspruches 3. Hierbei ist darauf abgestellt, dass der Mitnahmevorsprung sich nur über einen Teil der in Achsrichtung gegebenen Länge der Öffnung erstreckt, wobei der Mitnahmevorsprung - gesehen von dem Boden der Öffnung - erst mit Abstand zu dem Boden beginnt.

Der in der Zusammenfassungsstellung mit der Nut der Aufwickelwelle zur drehfesten Verbindung von der Aufwickelwelle und dem Adapterteil in die Nut der Aufwickelwelle eingreifende Mitnahmevorsprung des Adapterteiles, erstreckt sich bevorzugt nicht über die in axialer Richtung der Aufwickelwelle bzw. der adapterteilseitigen Öffnung betrachteten Gesamtlänge der Nut, die in radialer Überdeckung zu einem Wandungsbereich der Öffnung ist, sondern vielmehr nur über einen Abschnitt der Nut, der in axialer Richtung betrachtet kürzer ist als die in Achsrichtung gegebene Länge der Öffnung. Es ist auch bevorzugt bezüglich der Öffnung des Adapterteils nur ein Mitnahmevorsprung ausgebildet, sowie auch, weiter bevorzugt, die Aufwickelwelle nur eine Nut aufweist.

Der axiale Abstand zwischen dem Boden der Öffnung und einer bevorzugten Parallelebene zu dem Boden, welche Ebene den Mitnahmevorsprung zu Beginn desselben berührt, kann einem 0,5- bis 2-Fachen eines größten Erstreckungsmaßes des Mitnahmevorsprunges in Umfangsrichtung entsprechen, darüber hinaus alternativ oder kombinativ hierzu einem Zehntel bis einem Drittel der in axialer Richtung betrachteten Tiefe der Öffnung. Ist

Der Mitnahmevorsprung kann ausgehend von dem in Achsrichtung zu dem Boden der Öffnung beabstandeten Beginn hin in Richtung der freien Öffnungsfläche, d.h. hin in Richtung auf die freie Randkante der die Öffnung bildenden Wandung des Adapterteils durchlaufend gestaltet sein. Der Mitnahmevorsprung kann sich hierbei bis in die freie Öffnungsfläche erstrecken, alternativ mit axialem Abstand zu dieser freien Öffnungsfläche endend.

Zudem kann der Mitnahmevorsprung sich in axialer Richtung betrachtet aus einzelnen Vorsprüngen zusammensetzen, zwischen welchen sich nicht zu Mitnahmevorsprüngen verformte Bereiche der Wandung des Adapterteils erstrecken können.

Der Mitnahmevorsprung ist weiter bevorzugt bereits vor einem Zusammenstecken des Adapterteils mit der Antriebswelle in dem Adapterteil ausgebildet. Weiter bevorzugt ist die Passung, jedenfalls im Bereich des Vorsprungs, zwischen dem Adapter und der Aufwickelwelle so gestaltet, dass im zusammengesteckten Zustand eine Presspassung gegeben ist. Die Teile können allein schon aufgrund von Reibschluss ohne einen Werkzeugeinsatz nicht mehr voneinander entfernt werden.

Zufolge der vorgeschlagenen Lösung liegt in der Zusammenfassungsstellung der dem Boden der Öffnung zugewandte und bevorzugt sich auf dem Boden der Öffnung abstützende Endabschnitt der Aufwickelwelle von dem adapterteilseitigen Mitnahmevorsprung unbeeinflusst in dem Adapterteil ein. Es ergibt sich entsprechend ein Endabschnitt der Aufwickelwelle, in welchem die Nut der Aufwickelwelle freiliegt.

Bevorzugt ist der Mitnahmevorsprung im Wesentlichen durch die Wandung der Öffnung gebildet ist, unter Ausformung von im Querschnitt einen spitzen Winkel miteinander einschließenden Wandungsteilen, die somit einen spitzwinkligen Freiraum zwischen sich belassen.

Die spitzwinklige Ausrichtung der Wandungsteile bezieht sich auf einen Querschnitt quer zur Erstreckung einer Längsachse des Adapterteils. Der eingeschlossene Winkel kann bspw. zwischen 15° und bspw. 75° liegen, bevorzugt etwa zwischen 30° und 60°.

Die den spitzen Winkel einschließenden Wandungsteile können mit Bezug auf den Querschnitt eine Wandungsdicke aufweisen, die im Wesentlichen der Dicke der die Öffnung ansonsten umgebenden Wandung entspricht. So kann die Wandungsstärke eines der miteinander den spitzen Winkel einschließenden Wandungsteils - ggf. auch nur partiell - bspw. dem 0,8- bis 1,5-Fachen, darüber hinaus ggf. bis hin zu einem 2-Fachen der Wandungsstärke in Umfangsrichtung außerhalb der den spitzen Winkel zueinander einschließenden Wandungsteilen entsprechen.

Im Bereich des ausgebildeten Mitnahmevorsprunges ist die Wandung insgesamt in Umfangsrichtung betrachtet geschlossen. Der Mitnahmevorsprung ist bspw. durch eine keilartige Radialvertiefung nach innen gebildet, wobei der sich zwischen den Wandungsteilen ergebende spitzwinklige Freiraum nach radial außen betrachtet offen gestaltet sein kann.

Das Adapterteil ist ungeachtet einer der hier beschriebenen Ausführungsformen bevorzugt als Gussteil, weiter bevorzugt als Stahlgussteil gebildet. Somit kann insbesondere der Vorsprung frei von Umformspannungen gebildet sein.

Die Merkmale der vorbeschriebenen unabhängigen Ansprüche sind sowohl jeweils für sich wesentlich, als auch in jeder Kombination miteinander, wobei weiter Merkmale eines unabhängigen Anspruches mit den Merkmalen eines weiteren unabhängigen Anspruches oder mit Merkmalen mehrerer unabhängiger Ansprüche kombinierbar sind, weiter auch mit nur einzelnen Merkmalen eines oder mehrerer der weiteren unabhängigen Ansprüche.

Weitere Merkmale der Erfindung sind nachstehend, auch in der Figurenbeschreibung, oftmals in ihrer bevorzugten Zuordnung zu den bereits vorstehend erläuterten Anspruchskonzepten beschrieben, sie können aber auch in einer Zuordnung zu nur einem oder mehreren einzelnen Merkmalen, wie hier beschrieben sind, insbesondere der bereits abgehandelten Ansprüche, oder unabhängig oder in einem anderen Gesamtkonzept von Bedeutung sein. Auch ist es möglich, die Maßnahmen der bereits behandelten Ansprüche kombiniert vorzusehen.

So kann eine Innenfläche, welche die Öffnung in dem Adapterteil begrenzt, bodenseitig der Öffnung näher zu der Längsachse verlaufen als in einem demgegenüber entfernteren Bereich zum Boden. Es können entsprechend Maßnahmen getroffen sein, die in Achsrichtung betrachtet und in Richtung auf den Boden eine Verringerung der freien Querschnittsfläche der Öffnung bewirkt.

Diese Querschnittsverringerung kann insgesamt durch eine entsprechende Annäherung der Innenfläche des Adapterteiles erreicht sein, entsprechend bezogen über den gesamten inneren Umfang. Auch kann diese Verringerung gegeben sein allein durch in diesem, dem Boden zugewandten Endbereich der Öffnung innenflächenseitig der Wandung angeordnete Rippen o. dgl. bzw. ausgeformte, nach radial innen vorragende Erhebungen.

In einer bevorzugten Ausgestaltung verläuft die Innenfläche gesehen von dem Boden der Öffnung des Adapterteiles in Richtung auf die Mündungsfläche der Öffnung sich konisch erweiternd. Es kann, wie auch bevorzugt, hierbei eine über die axiale Längserstreckung betrachtete gleichmäßige konische Erweiterung vorliegen. Der sich hierbei ergebende Konus kann, wie bevorzugt, sich nur über einen Teilabschnitt der axialen Länge der die Öffnung umgebenden Wandung beziehen, bspw. ausgehend von dem Boden, über ein Zehntel bis ein Drittel der axialen Tiefe der Öffnung.

In einer weiteren Ausgestaltung kann sich eine beispielhafte konische Erweiterung zumindest über den axialen Erstreckungsbereich der Wandung erstrecken, der frei ist von einem Mitnahmevorsprung.

Weiter kann aber auch der Mitnahmevorsprung in Richtung auf die Öffnung eine abnehmende Erstreckung nach radial innen aufweisen. Die entsprechende Abnahme kann in einer betragsmäßigen Übereinstimmung zu der durch konische Erweiterung über die Höhe gegebene Abnahme der Erstreckung der Innenfläche nach radial innen gegeben sein. Sie kann aber auch stärker, bspw. um 10 bis 100 % mehr oder weniger, bspw. um 10 bis 50 % betragsmäßig weniger, erfolgen. Bevorzugt ist sie kontinuierlich durchgehend gegeben.

Alternativ oder ergänzend kann auch bezüglich des Mitnahmevorsprungs eine betragsmäßig gleiche Abnahme in Umfangsrichtung gegeben sein. Bezüglich des Bereiches, der in Umfangsrichtung gesehenen über die Innenfläche vorsteht. Betragsmäßig gleich bedeutet hierbei, dass es sich um einen gleichen Betrag handelt, um welchen die Innenfläche bezogen auf eine Mittelachse zu der Öffnung hin über die Höhe zurück weicht, ungeachtet dessen, ob die Innenfläche kombiniert eine solche Zurückweichung aufweist oder nicht. Auch die Angaben bezüglich mehr oder weniger sind im Hinblick auf die Erstreckung des Mitnahmevorsprungs in Umfangsrichtung in gleicher Weise möglich wie im Hinblick auf die radiale Erstreckung des Mitnahmevorsprungs beschrieben.

Somit ergibt sich für eine Dreiecks-Querschnittsfläche (die wie bevorzugt angegeben einseitig offen ist) zur Mündungsfläche der Öffnung hin gesehen eine zunehmende gleichförmige Verringerung.

Durch eine solche Gestaltung des Mitnahmevorsprungs kann sich auch ein Formschluss in Einsteckrichtung der Aufwickelwelle oberhalb des Beginns des Mitnahmevorsprungs, vom Boden der Öffnung aus gesehen, ergeben. Dies in Ergänzung oder alternativ zu der weiter unten beschriebenen Stauchung des Wellenendes in dem Adapterteil zur formschlüssigen Sicherung in Axialrichtung (Ausziehrichtung).

Durch die zum Boden hin sich ergebende Verringerung der Öffnungsquerschnittsfläche, ist in einer bevorzugten Ausgestaltung bodenseitig der Öffnung eine freie Querschnittsfläche der Öffnung gegeben, die kleiner ist als die quer zur Längserstreckung betrachtete Querschnittsfläche der Aufwickelwelle.

Die Wandung des Adapterteiles kann eine oder mehrere Durchgangsöffnungen aufweisen. Bevorzugt ist eine solche Durchgangsöffnung bodenseitig der adapterteilseitigen Öffnung ausgebildet. So kann durch eine so positionierte Durchgangsöffnung eine Kontrolle durchgeführt werden, bspw. ob die Aufwickelwelle ordnungsgemäß vollständig und anschlagbegrenzt durch den Boden der Öffnung eingeführt ist bzw. sich noch in dieser ordnungsgemäßen Stellung befindet.

Darüber hinaus kann eine solche Durchgangsöffnung in dem Umfangsbereich der Wandung des Adapterteils ausgebildet sein, welcher auch den Mitnahmevorsprung bildet. So kann die bspw. fensterartige Durchgangsöffnung in axialer Verlängerung zu dem Mitnahmevorsprung in der Wandung ausgebildet sein. Das axiale Erstreckungsmaß der Durchgangsöffnung kann hierbei angepasst sein an das axiale Abstandsmaß zwischen dem Boden und dem Beginn des Mitnahmevorsprunges.

Der Mitnahmevorsprung kann sich bezogen auf eine Mündungsfläche der Öffnung ausgehend von der Innenfläche der Wandung über 1/10 bis 1/3 des Durchmessermaßes der Öffnung erstrecken. So kann weiter das radiale Erstreckungsmaß des Mitnahmevorsprunges ausgehend von der Innenfläche der Wandung etwa einem Viertel eines maximalen Erstreckungsmaßes der Mündungsfläche der Öffnung entsprechen.

Der Boden der Öffnung kann sich in einer möglichen Ausgestaltung aus einer zentralen Plattform und einer umlaufenden Vertiefung bilden. Die Vertiefung kann in Axialrichtung betrachtet gegenüber der Auflageebene der Plattform ein Tiefenmaß von wenigen Millimetern, bspw. 1 bis 3 mm, aufweisen.

Wie erwähnt, ist eine Aufwickelwelle bevorzugt als Aluminiumprofilwelle gebildet. Diese wird auf Länge bevorzugt durch Sägen abgetrennt. Ein etwa noch überstehender Grat o. dgl. entlang der umlaufenden Randkante kann so entsprechend in die umlaufende Vertiefung eintauchen. Das vollständige Einstecken der Aufwickelwelle in die Öffnung des Adapterteiles bis in die durch die Plattform gegebene anschlagbegrenzte Endstellung ist nicht gehindert.

Die in radialer Richtung gemessene Breite der Vertiefung kann einem Zehntel bis einem Drittel des Durchmessermaßes der Öffnung entsprechen, weiter bspw. etwa einem Siebtel bis einem Fünftel.

In der Zuordnungs- und Nutzungsstellung, d.h. in der in das Adapterteil eingepressten Stellung der Aufwickelwelle kann ein Maß in Umfangsrichtung der Aufwickelwelle unterhalb des Mitnahmevorsprunges des Adapterteils, d.h. bevorzugt in dem mitnahmevorsprungfreien Bereich unmittelbar vor dem Boden der Öffnung, kleiner sein als im Bereich des Mitnahmevorsprunges und/oder in einem sich außerhalb des Adapterteils erstreckenden Bereich der Aufwickelwelle. Das Maß bezieht sich bevorzugt auf einen ungeachtet der Nut gegebenen Kreisumfang der Aufwickelwelle in einer Ebene senkrecht zu einer Längsmittelachse der Aufwickelwelle. Zugleich oder alternativ allein ist jedenfalls bevorzugt eine Verkleinerung des freien Öffnungsmaßes in Umfangsrichtung der Nut gegeben. Dies kann sich auch darin ausdrücken, dass bei einer im

Querschnitt spitzwinkligen Ausbildung der Nut dieser Winkel unterhalb des Mitnahmevorsprungs kleiner ist als im Bereich des Mitnahmevorsprungs. Dies kann, wie auch bevorzugt, durch die beispielhaft konische Verjüngung der Öffnungsquerschnittsfläche hin zum Boden der Öffnung erreicht sein. Im Zuge des bevorzugten Einpressens der Aufwickelwelle in das Adapterteil wird das abschließend sich auf dem Boden der Öffnung bzw. auf der Plattform des Bodens abstützende Ende der Aufwickelwelle gestaucht.

Die Verkleinerung des Maßes (Umfangsmaß) kann, wie bevorzugt, zufolge plastischer und elastischer Verformung der Aufwickelwelle erreicht sein.

Es kann sich eine Verringerung des Umfangsmaßes der Aufwickelwelle um einen Bruchteil eines Millimeters ergeben, bspw. eine Verringerung um ein Hundertstel bis ein Zehntel, bis hin zu einem Millimeter.

Die bevorzugte Stauchung des Wellenendes im Adapterteil führt außerhalb des Eingriffs des Mitnahmevorsprunges des Adapterteiles in die Nut der Aufwickelwelle zu der schon angesprochenen Verformung der wellenseitigen Nut. So kann sich das in Umfangsrichtung betrachtete Öffnungsmaß, wie angesprochen, zufolge dieser Stauchung verringern, womit (ggf. zusätzlich) eine Auszugsicherung der Aufwickelwelle in Achsrichtung erreicht sein kann. Es ergibt sich so eine formschlüssige Sicherung in Axialrichtung.

Die vor- und nachstehend angegebenen Bereiche bzw. Wertebereiche oder Mehrfachbereiche schließen hinsichtlich der Offenbarung auch sämtliche Zwischenwerte ein, insbesondere in 1/10-Schritten der jeweiligen Dimension, ggf. also auch dimensionslos.

Bspw. beinhaltet die Angabe 1/10 bis 1/3 auch die Offenbarung von 11/100 bis 1/3, 1/10 bis 29/30, 11/100 bis 29/30, etc. Diese Offenbarung kann einerseits zur Eingrenzung einer genannten Bereichsgrenze von unten und/oder oben, alternativ oder ergänzend aber zur Offenbarung eines oder mehrerer singulärer Werte aus einem jeweilig angegebenen Bereich dienen.

### Kurze Beschreibung der Zeichnungen

Nachstehend ist die Erfindung anhand der beigefügten Zeichnungen erläutert, die aber lediglich Ausführungsbeispiele darstellen. Ein Teil, das nur bezogen auf eines der Ausführungsbeispiele erläutert ist und bei einem weiteren Ausführungsbeispiel aufgrund der dort herausgestellten Besonderheit nicht durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: in explosionsperspektivischer Darstellung eine Aufwickelwelle mit einem zuordbaren Adapterteil und eine Antriebswelle;
- Fig. 2: die Zusammenbaustellung von Aufwickelwelle und Adapterteil;
- Fig. 3: das Adapterteil in perspektivischer Einzeldarstellung;
- Fig. 4: eine weitere perspektivische Darstellung des Adapterteiles;
- Fig. 5: das Adapterteil in Ansicht mit Blick auf einen, einen Mitnahmevorsprung ausformenden Bereich;
- Fig. 6: die Ansicht gemäß Pfeil VI in Figur 5;
- Fig. 7: die Ansicht gemäß Pfeil VII in Figur 5;
- Fig. 8: den Schnitt gemäß der Linie VIII-VIII in Figur 5;
- Fig. 9: den Schnitt gemäß der Linie IX-IX in Figur 5;
- Fig. 10: eine der Figur 5 entsprechende Darstellung, jedoch die Zusammenbaustellung gemäß Figur 2 betreffend;
- Fig. 11: den Schnitt gemäß der Linie XI-XI in Figur 10;
- Fig. 12: den Schnitt gemäß der Linie XII-XII in Figur 10;
- Fig. 13: den Schnitt gemäß der Linie XIII-XIII in Figur 10;
- Fig. 14: den Schnitt gemäß der Linie XIV-XIV in Figur 11;
- Fig. 15: in perspektivischer Darstellung ein Adapterteil in einer zweiten Ausführungsform;
- Fig. 16: eine weitere perspektivische Darstellung eines Adapterteil in weiterer Ausführungsform.

### Beschreibung der Ausführungsformen

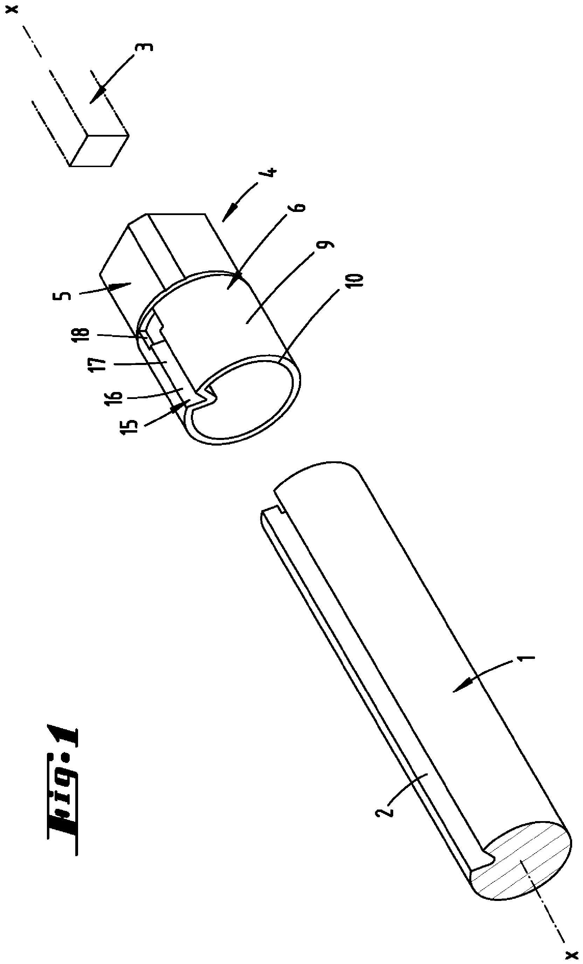

Dargestellt und beschrieben ist zunächst mit Bezug zu Figur 1 eine Aufwickelwelle 1 für einen LKW-Aufbau, bspw. zum Auf- und Abwickeln einer LKW-Plane.

Die Aufwickelwelle 1 ist insgesamt stabartig mit einem im Wesentlichen quer zu ihrer Längsachse x betrachteten kreisförmigen Querschnitt.

Die Aufwickelwelle 1 ist bevorzugt als Aluminiumprofil geformt.

Von der Außenfläche der Aufwickelwelle 1 ausgehend erstreckt sich nach radial innen eine Nut 2. Diese Nut 2 ist in Längserstreckung der Aufwickelwelle 1 betrachtet durchlaufend ausgebildet.

Mit Bezug auf einen Querschnitt durch die Aufwickelwelle 1 ergibt sich eine im Wesentlichen V-förmige Gestaltung der Nut 2 in Art einer entsprechenden Einkerbung. Der durch die Nutflanken eingeschlossene spitze Winkel beträgt in dem Ausführungsbeispiel etwa 30°.

Die von der Außenwandung nach radial innen betrachtete Tiefe der Nut 2 kann, wie dargestellt, etwa einem Fünftel des Außendurchmessers der Aufwickelwelle 1 entsprechen.

Die Aufwickelwelle 1 ist mit einer Antriebswelle 3 zu verbinden. Hierzu dient ein zwischen die Aufwickelwelle 1 und die Antriebswelle 3 einzusetzendes Adapterteil 4. In dieses Adapterteil 4 sind die Aufwickelwelle 1 und die Antriebswelle 3 steckhalterbar.

Während die Steckverbindung zwischen Aufwickelwelle 1 und Adapterteil 4 bevorzugt nach Herstellung der Verbindung nicht, insbesondere nicht werkzeuglos, lösbar ist, ist die Steckverbindung zwischen Adapterteil 4 und Antriebswelle 3 in bevorzugter Ausgestaltung ggf. auch werkzeuglos aufhebbar.

Die Zuordnung in Nutzungsstellung ist in Hintereinanderreihung entlang der Längsachse x, so dass in bevorzugter Ausgestaltung Körperachsen der Aufwickelwelle 1, der Antriebswelle 3 und des Adapterteiles 4 auf einer gemeinsamen Achse angeordnet sind.

Das Adapterteil 4 ist gegenüber der Aufwickelwelle 1 aus einem härteren Material, bspw. Stahl, gefertigt.

Im Wesentlichen setzt sich das Adapterteil 4 aus einem Adapterabschnitt 5 zur Zusammenwirkung mit der Antriebswelle 3 und einem Adapterabschnitt 6 zur Zusammenwirkung mit der Aufwickelwelle 1 zusammen. Die beiden Adapterabschnitte 5 und 6 sind in Erstreckungsrichtung der Längsachse x hintereinander angeordnet und in Umfangsrichtung drehfest miteinander verbunden. Dies ist bevorzugt erreicht zufolge einteiliger und materialeinheitlicher Ausgestaltung der beiden Adapterabschnitte 5 und 6.

In dem dargestellten Ausführungsbeispiel erstreckt sich der Adapterabschnitt 5 etwa über ein Drittel der gesamten Länge des Adapterteiles 4 in Erstreckungsrichtung der Längsachse x.

Der Adapterabschnitt 5 weist eine in einem Querschnitt quer zur Erstreckungsrichtung der Längsachse x quadratische Einstecköffnung 7 auf. Die Kantenlängen der hier quadratischen Öffnungsfläche sind angepasst an die Kantenlängen des mit dem Adapterteil 4 zusammenwirkenden Vierkant-Endes der Antriebswelle 3.

Es ist so in der Steckzuordnung eine um die Längsachse x drehfeste Verbindung zwischen Antriebswelle 3 und Adapterteil 4 gegeben. Diese drehfeste Verbindung kann auch durch andere nicht kreisrunde Querschnittsgestaltungen der Einstecköffnung 7 und des zugeordneten Endes der Antriebswelle 3 erreicht sein, so bspw. durch eine im Querschnitt betrachtete langgestreckte Rechteckform oder durch in Umfangsrichtung betrachtete Wellenform.

An dem in dem dargestellten Ausführungsbeispiel auch wandungsaußenseitig vierkant- bzw. quadratförmig gestalteten Adapterabschnitt 5 schließt sich der bevorzugt im Wesentlichen kreiszylindrische Adapterabschnitt 6 an. Im Übergangsbereich zwischen den Adapterabschnitten 5 und 6 ist ein quer zur Längsachse x verlaufender Boden 8 vorgesehen.

Von dem Boden 8 ausgehend erstreckt sich umlaufend zu der Längsachse x eine Wandung 9. Diese begrenzt eine Öffnung 10 des Adapterabschnittes 6.

Die Wandung 9 ist im Wesentlichen eine kreiszylindrisch ausgebildete Wandung, welche koaxial zur Längsachse x verläuft. Die hierdurch in Umfangsrichtung begrenzte Öffnung 10 ist in Richtung auf den anderen Adapterabschnitt 5 begrenzt durch den Boden 8. Abgewandt dem Boden 8 ergibt sich eine offene Mündungsfläche 11.

Der Boden 8 setzt sich im Wesentlichen zusammen aus einer mit Bezug auf die Längsachse x zentralen Plattform 12 mit einer quer zur Längsachse x ausgerichteten, ebenen Anlagefläche 13 und einer umlaufend zu der Plattform 12 ausgerichteten Vertiefung 14. Es ergibt sich so eine rinnenartige Vertiefung 14, welche sich zwischen der Innenfläche der Wandung 9 und der Plattform 12 erstreckt.

Die mit Bezug auf die Längsachse x gemessene radiale Breite a der Vertiefung 14 kann etwa einem Zehntel des Durchmessermaßes d der Öffnung 10 im Bereich der Mündungsfläche 11 entsprechen.

Die in axialer Richtung betrachtete Tiefe b der Vertiefung 14 kann etwa dem halben Breitenmaß a der Vertiefung 14 entsprechen.

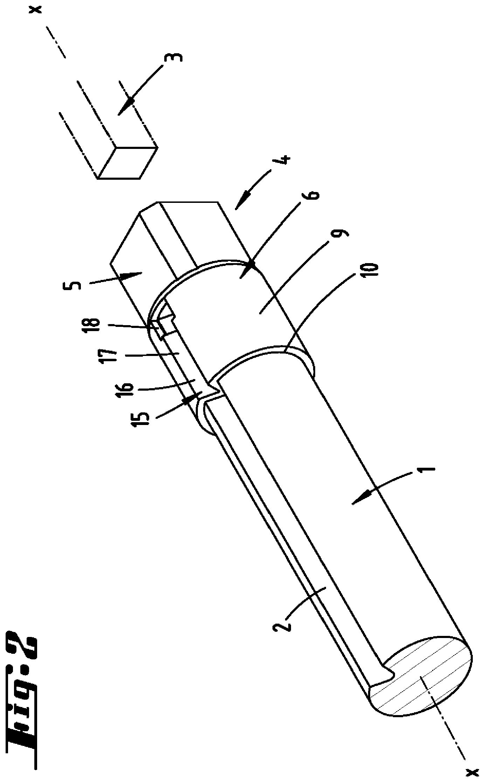

Das Adapterteil 4 ist im Bereich des Adapterabschnittes 6 mit einem Mitnahmevorsprung 15 versehen, zur Zusammenwirkung mit der Nut 2 der Aufwickelwelle 1. In Zusammenwirkungsstellung gemäß der Darstellung in Figur 2 ist so die in der Öffnung 10 aufgenommene Aufwickelwelle 1 gegenüber dem Adapterteil 4 in Umfangsrichtung drehfest.

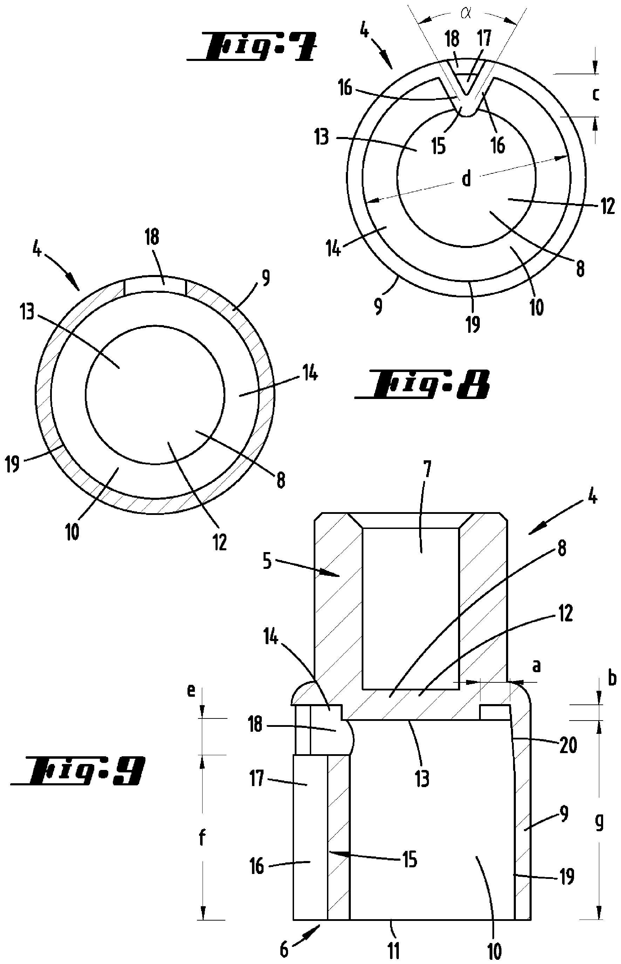

Der Mitnahmevorsprung 15 ist im Wesentlichen durch die Wandung 9 der Öffnung 10 gebildet, dies unter Ausformung von im Querschnitt einen spitzen Winkel a von etwa 30° miteinander einschließenden Wandungsteilen 16. Diese Wandungsteile 16 sind bspw. gemäß der Darstellung in Figur 7 V-förmig zueinander ausgerichtet, mit einer V-Spitze, die nach radial innen in Richtung auf die Längsachse x weist.

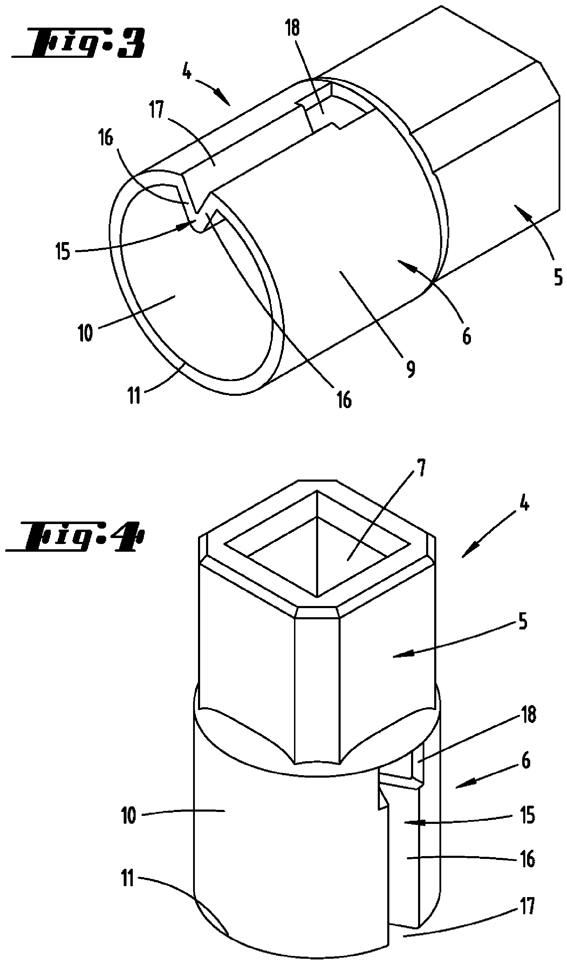

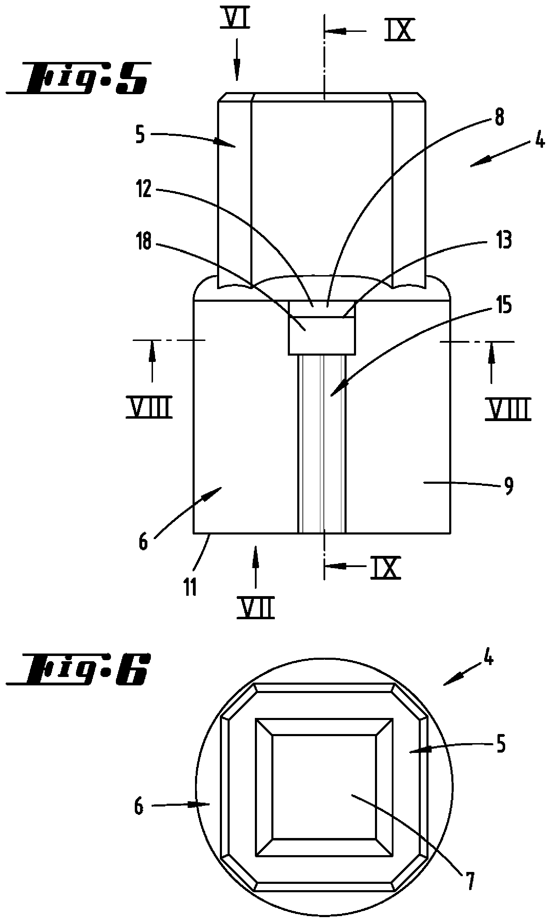

Es ergibt sich so nach außen ein spitzwinkliger Freiraum 17, der in dem dargestellten Ausführungsbeispiel gemäß den Figuren 1 bis 14 nach radial außen frei ausläuft.

Das radiale Vorstandsmaß c des Mitnahmevorsprungs 15, gemessen von der Innenfläche der Wandung 9 nach radial innen, entspricht etwa einem Fünftel bis einem Viertel des Durchmessermaßes d der Öffnung 10 im Bereich der Mündungsfläche 11.

Gemäß dem in den Figuren 1 bis 14 dargestellten ersten Ausführungsbeispiel erstreckt sich der Mitnahmevorsprung 15 ausgehend von der die Mündungsfläche 11 aufnehmenden Querebene des Adapterteiles 4 in Richtung auf den Boden 8 der Öffnung 10. Der Freiraum 17 ist in diesem Ausführungsbeispiel auch hin zu der die Mündungsfläche 11 aufnehmenden Ebene offen.

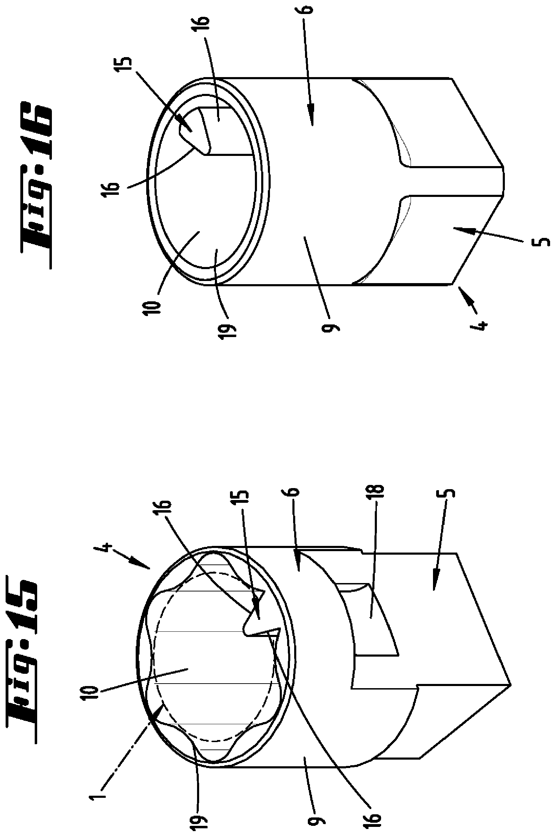

Alternativ kann der Mitnahmevorsprung 15 - wie bspw. in Figur 16 dargestellt - mit axialem Abstand zu der auch die Mündungsfläche 11 aufnehmenden Ebene des Adapterteiles 4 beginnen. In diesem Fall kann, wie auch dargestellt, der Freiraum 17 in Axialrichtung hin auf die vorbeschriebene Ebene weisend durch Wandungsmaterial überdeckt sein.

Die im Querschnitt betrachtete Materialstärke im Bereich der Wandungsteile 16 entspricht bevorzugt im Wesentlichen der Materialstärke der ansonsten kreiszylindrisch geformten Wandung 9.

Der Mitnahmevorsprung 15 ist im übertragenen Sinne in Art einer keilartigen Vertiefung der Wandung 9 gebildet.

Ausgehend von der Mündungsfläche 11 endet der Mitnahmevorsprung 15 mit Bezug auf die Erstreckung in Längsachsrichtung mit axialem Abstand zu der Anlagefläche 13 des Bodens 8 bzw. der Plattform 12. Dieser Abstand e (siehe Figur 9) kann, wie auch bevorzugt, etwa einem Fünftel der gesamten wirksamen Aufnahmetiefe g der Öffnung 10 zwischen der Anlagefläche 13 und der Mündungsfläche 11 entsprechen.

So erstreckt sich der Mitnahmevorsprung 15 in der ersten Ausführungsform ausgehend von der Mündungsfläche 11 über eine Länge f, die etwa vier Fünftel der gesamten Aufnahmetiefe g entspricht.

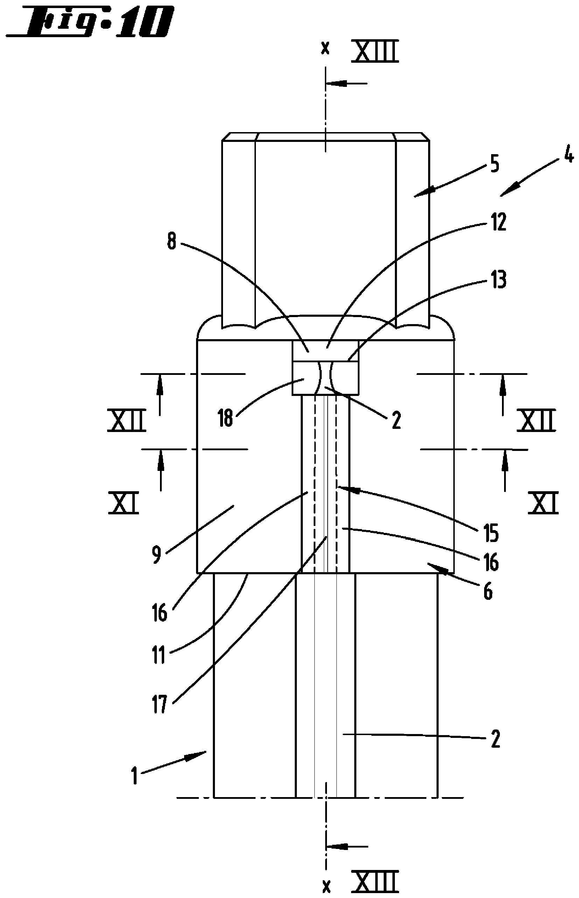

In Längserstreckungsrichtung anschließend an den Mitnahmevorsprung 15 ist der den Mitnahmevorsprung 15 zugleich ausbildende Umfangsabschnitt der Wandung 9 durchsetzt von einer Durchgangsöffnung 18. Diese ist mit Bezug auf einen Grundriss gemäß Figur 10, in welchem die Längsachse x sich als Linie darstellt, fensterartig mit rechteckigem Grundriss gestaltet, wobei eine Öffnungsrandkante in der Ebene verläuft, die zugleich den Grund der bodenseitigen Vertiefung 14 berührt. Die hierzu in Achsrichtung beabstandete und bevorzugt parallel hierzu verlaufende Randkante der Durchgangsöffnung 18 kann zugleich die zum Boden 8 in Axialrichtung distanzierte Endrandkante des Mitnahmevorsprunges 15 bilden.

Die unterbrochen von dem Mitnahmevorsprung 15 bzw. bodenbereichsseitig durch die Durchgangsöffnung 18 im Querschnitt darüber hinaus kreisrund verlaufende Innenfläche 19 der Wandung 9 verläuft ausgehend von dem Boden 8, in dem dargestellten Ausführungsbeispiel insbesondere ausgehend vom Grund der Vertiefung 14, in Längserstreckungsrichtung der Achse x sich konisch erweiternd. Der so gebildete Konusbereich 20 erstreckt sich in Achsrichtung bevorzugt über den Bereich der Durchgangsöffnung 18 hinaus, in dem dargestellten Ausführungsbeispiel insgesamt etwa ausgehend von dem Boden 8 über ein Drittel der Aufnahmetiefe g. Es kann hierbei ein Konuswinkel von wenigen Winkelgraden vorgesehen sein, so bspw. ein Konuswinkel von 1 bis 5°.

Der Konusbereich 20 läuft aus in einen kreiszylindrischen Abschnitt der Innenfläche 19 mit einem Durchmessermaß d, das angepasst ist an das AußenDurchmessermaß der Aufwickelwelle 1. Entsprechend ergeben sich in dem Konusbereich 20 in Richtung auf den Boden 8 sich verringernde Durchmessermaße, die allesamt kleiner sind als das Außendurchmessermaß der Aufwickelwelle 1.

Die Innenfläche 19 der Wandung 9 kann, wie bspw. in Figur 15 dargestellt, im Querschnitt auch abweichend von einer Kreisform gestaltet sein. So kann diesbezüglich eine in Umfangsrichtung betrachtete Wellenform gegeben sein, mit nach radial innen vorragenden Erhebungen, die sich in Umfangsrichtung abwechseln mit nach radial außen gerichteten Vertiefungen. Erhebungen und Vertiefungen können mit Bezug auf eine Querschnittsfläche wellenartig ineinander übergehen.

Insbesondere die erhabenen, und somit nach radial innen weisenden Bereiche, an welchen sich die Mantelfläche der Aufwickelwelle 1 in der Zuordnungsstellung partiell abstützt, können hin zum Boden 8 konisch ansteigend verlaufen.

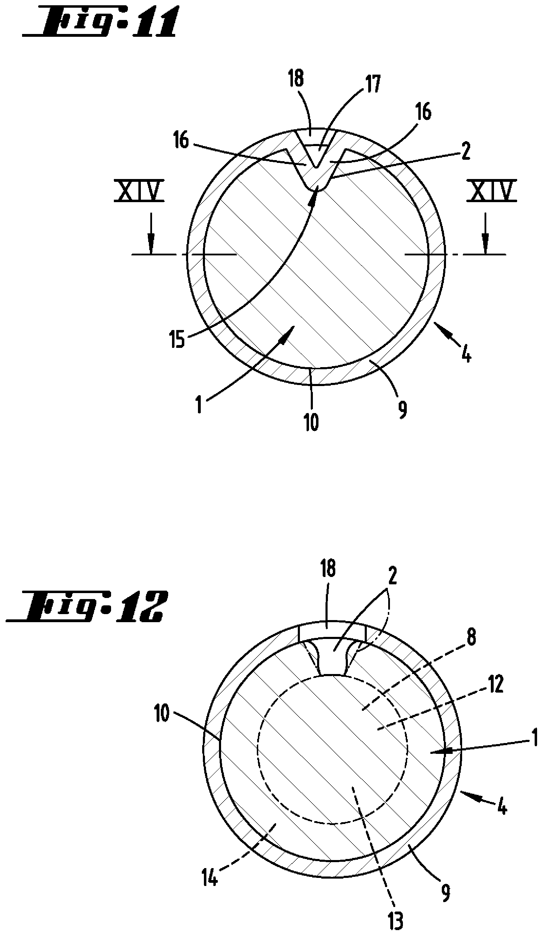

Das freie Ende der Aufwickelwelle 1 wird zur Festlegung mit dem Adapterteil 4 in die Öffnung 10 des Adapterteiles 4 eingepresst, dies zufolge Einschieben der Aufwickelwelle 1 in Axialrichtung, wobei die wellenseitige Nut 2 den adapterseitigen Mitnahmevorsprung 15 aufnimmt. Die V-förmig zueinander angeordneten Wandungsteile 16 der adapterteilseitigen Wandung 9 können an den zugewandten Flächen der wellenseitigen Nut 2 anliegen (vgl. Figur 11).

Über die Nut-/Vorsprung-Verbindung sind die Aufwickelwelle 1 und das Adapterteil 4 drehfest miteinander verbunden.

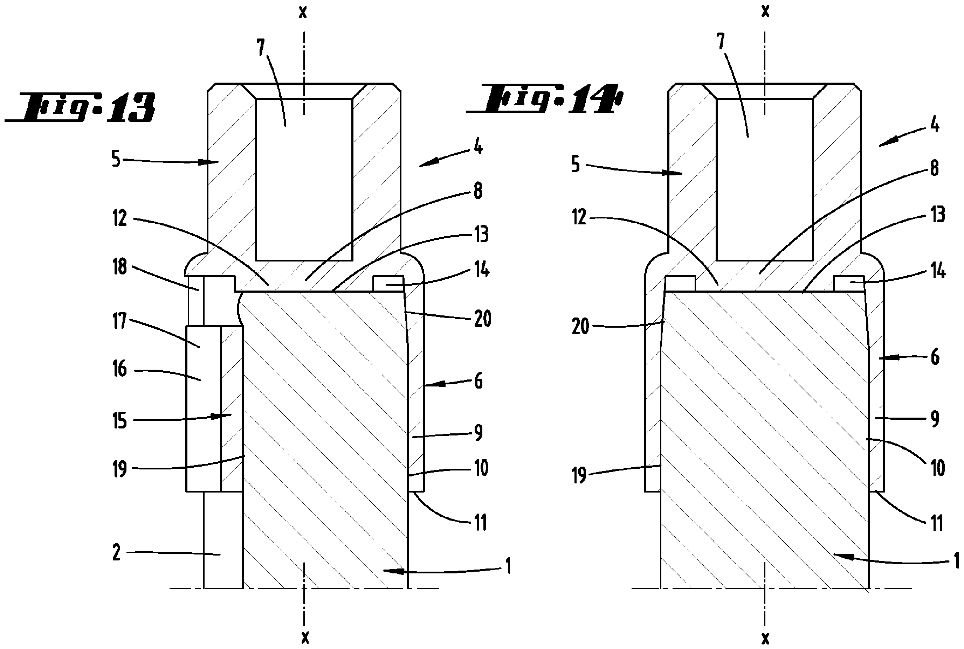

Durch die Durchgangsöffnung 18 ist von außen kontrollierbar, ob die dem Boden 8 zugewandte Stirnfläche der Aufwickelwelle 1 ordnungsgemäß an der plattformseitigen Anlagefläche 13 anliegt (vgl. Figur 13).

Durch die Ausbildung des Konusbereiches 20 erfolgt im korrespondierenden Endbereich der Aufwickelwelle 1 eine Materialstauchung, einhergehend mit einer Verringerung des Umfangsmaßes der Aufwickelwelle 1 in dem vorsprungfreien Bereich des Adapterteiles 4.

Das Umfangsmaß der Aufwickelwelle 1 wird in dem vorsprungfreien Bereich, so weiter über das axiale Maß entsprechend dem vorbeschriebenen Abstand e, gegenüber dem unbeeinflussten Bereich der Aufwickelwelle 1, bspw. im Bereich der Mündungsfläche 11, durch plastische und elastische Verformung verringert, so bspw. in Umfangsrichtung betrachtet, um bis zu 0,5 oder 1 mm.

Hierdurch ist ggf. auch ein erhöhter Reibschluss zwischen der wellenseitigen Oberfläche und der Innenfläche 19 der Wandung 9 erreicht.

Auch ist durch diese Materialstauchung in Umfangsrichtung eine Verformung im Bereich der wellenseitigen Nut 2 erreicht, insbesondere in Form einer Verringerung des quer zur Einschieberichtung betrachteten Freimaßes der Nut 2. Die Flanken der Nut 2 sind im Bereich der Stauchung in Umfangsrichtung plastisch aufeinander zu verformt, dies entsprechend in dem vorsprungfreien Bereich des Adapterteiles 4, weiter insbesondere im Bereich der Durchgangsöffnung 18.

Dadurch, dass zufolge dieser Verformung das quer zur Verlagerungsrichtung betrachtete Weitenmaß der Nut 2 verringert ist, ist hierdurch in günstiger Weise eine (ggf. zusätzliche) Abzugsicherung der Aufwickelwelle 1 von dem Adapterteil 4 gegeben. Der adapterteilseitige Mitnahmevorsprung 15 ist hintergriffen von dem eingeschnürten Nutabschnitt 2 der Aufwickelwelle 1, welcher Nutabschnitt 2 hierdurch quasi in Abzugsrichtung sperrend wirkt (vgl. Figuren 12 und 13).

**Liste der Bezugszeichen**

| | | | |
|---|---|---|---|
| 1 | Aufwickelwelle | a | Breite |
| 2 | Nut | b | Tiefe |
| 3 | Antriebswelle | c | Vorstandsmaß |
| 4 | Adapterteil | d | Durchmessermaß |
| 5 | Adapterabschnitt | e | Abstand |
| 6 | Adapterabschnitt | f | Länge |
| 7 | Einstecköffnung | g | Aufnahmetiefe |
| 8 | Boden | x | Längsachse |
| 9 | Wandung | | |
| 10 | Öffnung | | |
| 11 | Mündungsfläche | | |
| 12 | Plattform | a | Winkel |
| 13 | Anlagefläche | | |
| 14 | Vertiefung | | |
| 15 | Mitnahmevorsprung | | |
| 16 | Wandungsteil | | |
| 17 | Freiraum | | |
| 18 | Durchgangsöffnung | | |
| 19 | Innenfläche | | |
| 20 | Konusbereich | | |

## Patentansprüche

1. Zusammenfassung einer Aufwickelwelle (1) für einen LKW-Aufbau mit einem Adapterteil (4), um über eine Antriebswelle (3) auf die Aufwickelwelle (1) einwirken zu können, wobei die im Querschnitt im Wesentlichen eine Kreisform aufweisende Aufwickelwelle (1) in eine angepasste, sich in Achsrichtung der Aufwickelwelle (1) erstreckende und einen Boden (8) aufweisende Öffnung (10) des Adapterteils (4) eingeführt ist, wobei die Aufwickelwelle (1) eine sich in Längsrichtung der Aufwickelwelle (1) und von der Außenfläche nach innen erstreckende Nut (2) aufweist, in welche ein Mitnahmevorsprung (15) des Adapterteils (4), der ausgebildet ist von einer die Öffnung (10) bildenden Wandung (9), eingreift, **dadurch gekennzeichnet, dass** der Mitnahmevorsprung (15) sich nur über einen Teil der in Achsrichtung gegebenen Länge der Öffnung (10) erstreckt, wobei der Mitnahmevorsprung (15) gesehen von dem Boden (8) der Öffnung (10) erst mit Abstand (e) zu dem Boden (8) beginnt.

2. Zusammenfassung nach Anspruch 1, **dadurch gekennzeichnet, dass** der Mitnahmevorsprung (15) im Wesentlichen durch die Wandung (9) der Öffnung (10) gebildet ist, unter Ausformung von im Querschnitt einen spitzen Winkel (a) miteinander einschließenden Wandungsteilen (16), die somit einen spitzwinkeligen Freiraum (17) zwischen sich belassen.

3. Adapterteil (4) für eine Verbindung zwischen einer Aufwickelwelle (1) für einen LKW-Aufbau und einer Antriebswelle (3), wobei das Adapterteil (4) eine in Achsrichtung sich erstreckende und einen Boden (8) aufweisende Öffnung (10) aufweist und einen im Querschnitt nach innen gerichteten Mitnahmevorsprung (15), der ausgebildet ist von einer die Öffnung (10) bildenden Wandung (9), **dadurch gekennzeichnet, dass** der Mitnahmevorsprung (15) sich nur über einen Teil der in Achsrichtung gegebenen Länge der Öffnung (10) erstreckt, wobei der Mitnahmevorsprung (15) gesehen von dem Boden (8) der Öffnung (10) erst mit Abstand (e) zu dem Boden (8) beginnt.

4. Adapterteil nach Anspruch 3, **dadurch gekennzeichnet, dass** der Mitnahmevorsprung (15) im Wesentlichen durch die Wandung (9) der Öffnung (10) gebildet ist, unter Ausformung von im Querschnitt einen spitzen Winkel (a) miteinander einschließenden Wandungsteilen (16), die somit einen spitzwinkeligen Freiraum (17) zwischen sich belassen.

5. Zusammenfassung oder Adapterteil nach einem der vorhergehenden Ansprüche, **dadurch gekennzeichnet, dass** eine Innenfläche (19), welche die Öffnung (10) in dem Adapterteil (4) begrenzt, bodenseitig der Öffnung (10) näher zu der Längsachse (x) verläuft als in einem demgegenüber entfernteren Bereich zum Boden (8).

6. Zusammenfassung oder Adapterteil nach einem der vorhergehenden Ansprüche, **dadurch gekennzeichnet, dass** die Innenfläche (19) gesehen von dem Boden (8) der Öffnung (10) des Adapterteils (4) sich konisch erweiternd verläuft.

7. Zusammenfassung oder Adapterteil nach einem der vorhergehenden Ansprüche, **dadurch gekennzeichnet, dass** die Wandung (9) des Adapterteils (4) eine oder mehrere Durchgangsöffnungen (18) aufweist.

8. Zusammenfassung oder Adapterteil nach Anspruch 7, **dadurch gekennzeichnet, dass** eine Durchgangsöffnung (18) bodenseitig ausgebildet ist.

9. Zusammenfassung oder Adapterteil nach einem der Ansprüche 7 oder 8, **dadurch gekennzeichnet, dass** eine Durchgangsöffnung (18) in dem Umfangsbereich der Wandung (9) des Adapterteils (4) ausgebildet ist, welcher den Mitnahmevorsprung (15) bildet.

10. Zusammenfassung oder Adapterteil nach einem der vorhergehenden Ansprüche, **dadurch gekennzeichnet, dass** sich der Mitnahmevorsprung (15) bezogen auf eine Mündungsfläche (11) der Öffnung (10) ausgehend von der Innenfläche (19) der Wandung (9) über 1/10 bis 1/3 des Durchmessermaßes (d) der Öffnung (10) erstreckt.

11. Zusammenfassung oder Adapterteil nach einem der vorhergehenden Ansprüche, **dadurch gekennzeichnet, dass** der Boden (8) der Öffnung (10) aus einer zentralen Plattform (12) und einer umlaufenden Vertiefung (14) gebildet ist.

12. Zusammenfassung oder Adapterteil nach Anspruch 11, **dadurch gekennzeichnet, dass** eine in radialer Richtung gemessene Breite (a) der Vertiefung (14) 1/10 bis 1/3 des Durchmessermaßes (d) der Öffnung (10) entspricht.

13. Zusammenfassung oder Adapterteil nach einem der vorhergehenden Ansprüche, **dadurch gekennzeichnet, dass** ein Maß in Umfangsrichtung der Aufwickelwelle (1) unterhalb des Mitnahmevorsprunges (15) des Adapterteils (4) kleiner ist als im Bereich des Mitnahmevorsprungs (15).

14. Zusammenfassung oder Adapterteil nach einem der vorhergehenden Ansprüche, **dadurch gekennzeichnet, dass** ein Maß in Umfangsrichtung der Aufwickelwelle (1) unterhalb des Mitnahmevorsprunges (15) des Adapterteils (4) kleiner ist als in einem sich außerhalb des Adapterteils (4) erstreckenden Bereich der Aufwickelwelle (1).

15. Zusammenfassung oder Adapterteil nach einem der Ansprüche 13 oder 14, **dadurch gekennzeichnet, dass** die Verkleinerung des Maßes zufolge plastischer und elastischer Verformung der Aufwickelwelle (1) erreicht ist.

## Claims

1. Combination of a wind-up shaft (1) for a heavy goods vehicle structure with an adapter part (4) for the purpose of being able to act on the wind-up shaft (1) via a drive shaft (3), the wind-up shaft (1) that has a substantially circular cross section being inserted into an adapted opening (10) of the adapter part (4), which opening extends in the axial direction of the wind-up shaft (1) and has a base (8), the wind-up shaft (1) having a groove (2) that extends in the longitudinal direction of the wind-up shaft (1) and inwards from the outer surface, in which groove a catch projection (15) of the adapter part (4) engages, which projection is formed by a wall (9) that forms the opening (10), **characterised in that** the catch projection (15) extends only over part of the axial length of the opening (10), the catch projection (15), when seen from the base (8) of the opening (10), only beginning at a spacing (e) from the base (8).

2. Combination according to claim 1, **characterised in that** the catch projection (15) is substantially formed by the wall (9) of the opening (10), wall parts (16) that together enclose an acute angle (α) in cross section thus being formed, which parts thus leave an acute-angled free space (17) between them.

3. Adapter part (4) for a connection between a wind-up shaft (1) for a heavy goods vehicle structure and a drive shaft (3), the adapter part (4) having an opening (10) that extends in the axial direction and has a base (8) and having a catch projection (15), which projection is oriented inwards in cross section and formed by a wall (9) that forms the opening (10), **characterised in that** the catch projection (15) extends only over part of the axial length of the opening (10), the catch projection (15), when seen from the base (8) of the opening (10), only beginning at a spacing (e) from the base (8).

4. Adapter part according to claim 3, **characterised in that** the catch projection (15) is substantially formed by the wall (9) of the opening (10), wall parts (16) that together enclose an acute angle (α) in cross section thus being formed, which parts thus leave an acute-angled free space (17) between them.

5. Combination or adapter part according to any of the preceding claims, **characterised in that** an inner surface (19) that delimits the opening (10) in the adapter part (4) extends closer to the longitudinal axis (x) at the base of the opening (10) than in a region that is comparatively more remote from the base (8).

6. Combination or adapter part according to any of the preceding claims, **characterised in that** the inner surface (19), when seen from the base (8) of the opening (10) of the adapter part (4), extends in a conically widening manner.

7. Combination or adapter part according to any of the preceding claims, **characterised in that** the wall (9) of the adapter part (4) comprises one or more through-openings (18).

8. Combination or adapter part according to claim 7, **characterised in that** a through-opening (18) is formed on the base.

9. Combination or adapter part according to either claim 7 or claim 8, **characterised in that** a through-opening (18) is formed in the circumferential region of the wall (9) of the adapter part (4), which region forms the catch projection (15).

10. Combination or adapter part according to any of the preceding claims, **characterised in that** the catch projection (15) extends, with respect to a mouth surface (11) of the opening (10), from the inner surface (19) of the wall (9) over from 1/10 to 1/3 of the diameter measurement (d) of the opening (10).

11. Combination or adapter part according to any of the preceding claims, **characterised in that** the base (8) of the opening (10) is formed by a central platform (12) and a circumferential recess (14).

12. Combination or adapter part according to claim 11, **characterised in that** a width (a) of the recess (14) measured in the radial direction corresponds to from 1/10 to 1/3 of the diameter measurement (d) of the opening (10).

13. Combination or adapter part according to any of the preceding claims, **characterised in that** a measurement in the circumferential direction of the wind-up shaft (1) below the catch projection (15) of the adapter part (4) is smaller than in the region of the catch projection (15).

14. Combination or adapter part according to any of the preceding claims, **characterised in that** a measurement in the circumferential direction of the wind-up shaft (1) below the catch projection (15) of the adapter part (4) is smaller than in a region of the wind-up shaft (1) that extends beyond the adapter part (4).

15. Combination or adapter part according to either claim 13 or claim 14, **characterised in that** the reduction in the measurement is achieved as a result of plastic and elastic deformation of the wind-up shaft (1).

## Revendications

1. Combinaison d'un arbre d'enroulement (1) pour une carrosserie de camion, avec une pièce d'adaptation (4) pour pouvoir agir sur l'arbre d'enroulement (1) par l'intermédiaire d'un arbre d'entraînement (3), dans laquelle l'arbre d'enroulement (1), qui a une section transversale sensiblement circulaire, est inséré dans une ouverture adaptée (10) de la pièce d'adaptation (4), qui s'étend en direction axiale de l'arbre d'enroulement (1) et présente un fond (8), dans lequel l'arbre d'enroulement (1) présente une rainure (2) qui s'étend dans la direction longitudinale de l'arbre d'enroulement (1) et vers l'intérieur à partir de la surface extérieure et dans laquelle est insérée une saillie d'entraînement (15) de la pièce d'adaptation (4) qui est formée par une paroi (9) formant l'ouverture (10), **caractérisée en ce que** la saillie d'entraînement (15) ne s'étend que sur une partie de la longueur de l'ouverture (10) en direction axiale, la saillie d'entraînement (15) vue du fond (8) de l'ouverture (10) ne commençant qu'à une distance (e) du fond (8) de l'ouverture (10).

2. Combinaison selon la revendication 1, **caractérisée en ce que** la saillie d'entraînement (15) est essentiellement formée par la paroi (9) de l'ouverture (10) en formant des parties de paroi (16) qui, en section transversale, forment entre elles un angle aigu (α) laissant ainsi un espace libre (17) à angle aigu entre elles.

3. Pièce d'adaptation (4) pour une liaison entre un arbre d'enroulement (1) pour une carrosserie de camion et un arbre d'entraînement (3), dans laquelle la pièce d'adaptation (4) présente une ouverture (10) s'étendant en direction axiale et présentant un fond (8), et une saillie d'entraînement (15) qui est, en section transversale, dirigée vers l'intérieur et est formée par une paroi (9) formant l'ouverture (10), **caractérisée en ce que** la saillie d'entraînement (15) ne s'étend que sur une partie de la longueur de l'ouverture (10) en direction axiale, dans laquelle la saillie d'entraînement (15) vue du fond (8) de l'ouverture (10) ne commence qu'à une distance (e) du fond (8) de l'ouverture (10).

4. Pièce d'adaptation selon la revendication 3, **caractérisée en ce que** la saillie d'entraînement (15) est essentiellement formée par la paroi (9) de l'ouverture (10) en formant des parties de paroi (16) qui, en section transversale, forment entre elles un angle aigu (α) laissant ainsi un espace libre (17) à angle aigu entre elles.

5. Combinaison ou pièce d'adaptation selon l'une des revendications précédentes, **caractérisée en ce qu'**une surface intérieure (19), qui délimite l'ouverture (10) dans la pièce d'adaptation (4), s'étend plus près de l'axe longitudinal (x) du côté du fond de l'ouverture (10) que dans une région plus éloignée du fond (8).

6. Combinaison ou pièce d'adaptation selon l'une des revendications précédentes, **caractérisée en ce que** la surface intérieure (19), vue du fond (8) de l'ouverture (10) de la pièce d'adaptation (4), s'étend de manière conique en s'élargissant.

7. Combinaison ou pièce d'adaptation selon l'une des revendications précédentes, **caractérisée en ce que** la paroi (9) de la pièce d'adaptation (4) présente une ou plusieurs ouvertures traversantes (18).

8. Combinaison ou pièce d'adaptation selon la revendication 7, **caractérisée en ce qu'**une ouverture traversante (18) est formée du côté du fond.

9. Combinaison ou pièce d'adaptation selon l'une des revendications 7 ou 8, **caractérisée en ce qu'**une ouverture traversante (18) est formée dans la région périphérique de la paroi (9) de la pièce d'adaptation (4) qui forme la saillie d'entraînement (15).

10. Combinaison ou pièce d'adaptation selon l'une des revendications précédentes, **caractérisée en ce que** la saillie d'entraînement (15) s'étend par rapport à une surface d'embouchure (11) de l'ouverture (10) en partant de la surface intérieure (19) de la paroi (9) sur 1/10 à 1/3 de la dimension du diamètre (d) de l'ouverture (10).

11. Combinaison ou pièce d'adaptation selon l'une des revendications précédentes, **caractérisée en ce que** le fond (8) de l'ouverture (10) est formé par une plate-forme centrale (12) et un évidement périphérique (14).

12. Combinaison ou pièce d'adaptation selon la revendication 11, **caractérisée en ce qu'**une largeur (a) de l'évidement (14) mesurée dans la direction radiale correspond à 1/10 à 1/3 de la dimension du diamètre (d) de l'ouverture (10).

13. Combinaison ou pièce d'adaptation selon l'une des revendications précédentes, **caractérisée en ce qu'**une dimension dans la direction circonférentielle de l'arbre d'enroulement (1) en dessous de la saillie d'entraînement (15) de la pièce d'adaptation (4) est plus petite que dans la région de la saillie d'entraînement (15).

14. Combinaison ou pièce d'adaptation selon l'une des revendications précédentes, **caractérisée en ce qu'**une dimension dans la direction circonférentielle de l'arbre d'enroulement (1) en dessous de la saillie d'entraînement (15) de la pièce d'adaptation (4) est plus petite que dans une région de l'arbre d'enroulement (1) s'étendant à l'extérieur de la pièce d'adaptation (4).

15. Combinaison ou pièce d'adaptation selon l'une des revendications 13 ou 14, **caractérisée en ce que** la réduction de la dimension est obtenue par une déformation plastique et élastique de l'arbre d'enroulement (1).
